# FASCICULE DE BREVET EUROPEEN

(11) **EP 3 043 347 B1**
(45) Date de publication et mention de la délivrance du brevet: **04.03.2020**
(21) Numéro de dépôt: 15000010.7
(22) Date de dépôt: 07.01.2015
(51) Int. Cl.: G10K 11/168, B32B 3/18, B64C 1/40, B32B 5/02, B32B 5/18, B32B 7/06, B32B 7/08, B32B 27/06, B32B 27/12, B32B 27/20, B32B 27/28, B32B 27/32, B32B 27/34, B32B 27/36, B32B 27/40, B32B 3/26, B32B 7/05, B64C 1/12, B32B 7/12, B32B 7/14

(54) **Panneau d'habillage insonorisant, et aéronef**
Schalldämmendes Verkleidungspaneel, und Luftfahrzeug
Soundproofing trim panel, and aircraft

(43) Date de publication de la demande: 13.07.2016
(73) Titulaire: Airbus Helicopters, 13725 Marignane Cedex (FR)
(72) Inventeur: Caillet, Julien, 13320 Bouc BEL AIR (FR); Sibois, Hélène, 13170 LES Pennes Mirabeau (FR); Fabrizio, Jean-Pierre, 13013 Marseille (FR); Knor, Egle, 80797 Munich (DE)
(74) Mandataire: GPI & Associés

(56) Documents cités:
- US-A- 5 360 500
- US-A- 5 706 249
- US-A1- 2012 125 710
- US-A1- 2013 075 193
- US-A1- 2013 328 440
- US-B1- 6 202 786
- US-B1- 8 657 067

## Description

La présente invention concerne un panneau d'habillage insonorisant, et un aéronef comportant un tel panneau.

L'invention se situe donc dans le domaine du traitement des nuisances acoustiques à bord d'un aéronef.

La présente invention est plus particulièrement relative aux systèmes de traitement de bruit. En effet, la réduction sonore du bruit est un problème croissant du fait des impacts du bruit sur le confort et la santé des personnes. Ce problème est en particulier mais non exclusivement rencontré dans le domaine technique des aéronefs, et notamment des aéronefs à voilure tournante.

En effet, un aéronef à voilure tournante comprend au moins un rotor de sustentation mis en rotation par une chaîne cinématique. Cette chaîne cinématique peut inclure au moins un moteur et au moins une boîte de transmission de puissance interposée entre le moteur et le rotor de sustentation.

De plus, un aéronef peut comprendre des organes mécaniques mobiles pour refroidir des équipements de l'aéronef, et notamment une boîte de transmission de puissance et des équipements électroniques. Des organes mécaniques mobiles peuvent aussi être utilisés pour distribuer de l'air dans une cabine. Classiquement, un ventilateur est utilisé pour refroidir un équipement et/ou pour déplacer une masse d'air.

Ainsi, un aéronef comprend généralement de multiples sources de bruit, incluant par exemple un ou plusieurs rotors, une boîte de transmission de puissance, et des pales de turbomoteurs ou encore de ventilateurs.

Dès lors, ces sources de bruit peuvent couvrir sur un giravion l'ensemble du spectre des fréquences audibles par un homme. Ce spectre de fréquences s'étend classiquement d'un bruit audible ayant une composante fréquentielle de l'ordre de 20 Hertz jusqu'à un bruit audible ayant une composante fréquentielle de l'ordre de 20 Kilohertz.

Un aéronef peut par conséquent être équipé de dispositifs actifs et/ou passifs afin d'opérer une réduction sonore.

En particulier, un panneau structurel d'un aéronef et/ou un panneau d'habillage de cet aéronef sont étudiés pour optimiser le confort acoustique d'occupants de l'aéronef. Un panneau d'aéronef peut alors notamment avoir pour fonction d'assurer une isolation acoustique ou un amortissement acoustique selon la stratégie suivie, tout en ayant la tenue mécanique requise.

Selon une première réalisation connue, un panneau d'habillage est muni d'au moins une paroi en matériaux composites. Par exemple, une matrice époxy renforcée de fibres tissées est utilisée.

Le panneau peut comprendre selon une première variante une paroi monolithique.

Selon une deuxième variante, le panneau peut comprendre deux parois enserrant une âme, par exemple une âme en nids d'abeilles.

Cette première réalisation connue propose donc de réaliser un panneau d'habillage en matériaux composites.

Cette première réalisation connue présente l'avantage de pouvoir conduire à un panneau présentant une raideur et une résistance suffisantes pour respecter les règlements de certification des aéronefs, pour par exemple résister aux charges subies en vol ou durant un crash.

Le panneau peut alors être un panneau autoporteur susceptible de porter des équipements.

On entend par « panneau autoporteur » ou « paroi autoporteuse », un panneau ou une paroi présentant une rigidité minimale pour être capable de conserver globalement sa forme sous les sollicitations prédéterminées par le constructeur, telles que les sollicitations habituellement subies par un panneau d'habillage sur un aéronef (vibrations, appuis des passagers, petits chocs), voire pour porter des petits équipements avec un nombre de fixations aussi limité que possible.

De plus, les panneaux obtenus présentent une masse relativement faible, la masse étant usuellement un paramètre important sur un aéronef.

Un constructeur d'aéronef est alors enclin à fabriquer des panneaux d'habillage en matériaux composites. Néanmoins, un tel panneau d'habillage en matériaux composites peut présenter un coût de fabrication relativement élevé.

Selon une deuxième réalisation connue, un panneau peut comprendre une unique paroi obtenue à l'aide de méthodes peu onéreuses, telles que des méthodes de formage ou de moulage économiques de polymères sans fibres tissés. A titre d'exemple, la paroi d'un panneau est réalisée à partir d'un constituant en polymère thermoformé, d'une feuille emboutie ou encore à partir de plastique injecté dans un moule.

Néanmoins, à iso-masse, un panneau obtenu selon la deuxième réalisation connue présente une raideur inférieure à un panneau obtenu selon la première réalisation connue.

La fabrication d'un panneau d'habillage autoporteur selon la deuxième réalisation connue conduit alors à un panneau relativement lourd. L'épaisseur d'un panneau selon la deuxième réalisation connue doit en effet être maximisée pour conférer au panneau un caractère autoporteur.

D'un point de vue isolation acoustique, un panneau présente une capacité d'isolation acoustique qui suit principalement une loi dite « loi de masse » dans la gamme des fréquences impactant le confort auditif d'un individu. Cette loi de masse indique que la capacité d'isolation d'un panneau mesurée en décibels varie proportionnellement au logarithme de la masse surfacique de ce panneau.

A iso-raideur, un panneau réalisé selon la deuxième réalisation connue présente donc une capacité d'isolation acoustique meilleure qu'un panneau réalisé selon la première réalisation connue.

De plus, la capacité d'isolation d'un panneau d'habillage dépend également de sa fréquence critique de vibration.

A cette fréquence critique, l'isolation acoustique d'un panneau devient plus faible. Il est connu que cette fréquence critique diminue lorsque la raideur d'un panneau augmente. Dès lors, à iso-masse, un panneau en polycarbonate présente une fréquence critique plus élevée que la fréquence critique d'un panneau en matériaux composites.

La fréquence critique d'un panneau en polycarbonate peut alors se trouver en dehors de la gamme des fréquences audibles.

Un constructeur est alors confronté à un choix délicat pour optimiser le confort sonore d'un occupant d'un aéronef. Il parait intéressant de réaliser un panneau d'habillage selon la deuxième réalisation connue pour éloigner la fréquence critique du panneau de la gamme des fréquences audibles. Toutefois, le panneau risque de ne pas avoir une tenue mécanique suffisante pour être autoporteur.

Si le constructeur choisit la première réalisation connue pour le raidir, ce constructeur obtient alors un panneau plus onéreux et risquant d'avoir une fréquence critique gênante.

La fabrication d'un panneau d'habillage peut alors résulter d'un compromis difficile à réaliser.

On comprend qu'un panneau isolant acoustiquement ne peut pas être considéré comme étant un simple ensemble d'une ou plusieurs parois usuelles.

Pour améliorer l'isolation acoustique et en particulier pour traiter des bruits présentant des hautes fréquences, à savoir des fréquences supérieures à 1000 Hertz par exemple, un panneau peut comprendre deux parois découplées.

Le document FR 2.939.406 suggère d'interposer une mousse entre deux parois pour découpler ces deux parois. Ce découplage vise à éviter la transmission de vibrations d'une première paroi excitée par un bruit vers une deuxième paroi.

La mousse inclut éventuellement des inserts pour ne pas s'affaisser.

La performance acoustique du panneau n'est alors pas nécessairement liée à une loi de masse.

Cependant, il peut être délicat d'implémenter des parois du type de la deuxième réalisation connue précédente. En effet, le découplage des parois nécessiterait l'emploi de parois épaisses pour conférer au panneau une tenue mécanique acceptable, avec pour corollaire une masse prohibitive.

La première paroi peut comprendre une structure en sandwich de matériaux composites pour conférer un caractère autoporteur au panneau, la deuxième paroi étant éventuellement une paroi souple. Compte tenu de la loi de masse, le panneau doit toutefois alors avoir une épaisseur importante pour présenter une masse suffisante afin d'obtenir une isolation optimisée.

Le coût de production d'un tel panneau peut de plus être relativement important.

Un constructeur peut choisir de traiter un bruit en employant selon une première stratégie un panneau isolant pour empêcher la transmission d'un bruit transmis par ce panneau.

L'invention vise un tel panneau isolant.

Selon une deuxième stratégie, le panneau est un panneau non pas isolant mais amortissant visant à dissiper un bruit transmis par ce panneau.

On connaît les documents FR 2.894.539 et EP 0.894.617 qui semblent relatifs à des panneaux amortissants.

En effet, le document FR 2.894.539 présente un panneau muni d'une coque supérieure poreuse et d'une coque inférieure étanche pourvue d'au moins un logement. Le panneau présente alors au moins une cavité délimitée par la paroi d'un logement et la zone de la coque supérieure qui lui fait face. Un bruit peut alors traverser la coque supérieure de manière à être amorti dans la cavité.

Le document EP 0.894.617 présente un panneau muni de couches de recouvrement et/ou de décoration recouvrant deux côtés opposés d'un support non tissé. Ce support est pénétré de zones en forme de prisme reliées aux couches de recouvrement et/ou de décoration. Une couche de recouvrement peut être poreuse.

Par ailleurs, le document US 2011/091673 décrit un corps muni de deux parois et d'une mousse mis en forme par un moule. Le moule déforme ainsi au moins une paroi et la mousse,

Le document GB 2 462 373 décrit un revêtement pour automobile.

Le document US5706249 décrit un agencement d'espacement de panneaux à amortissement acoustique et vibratoire. Des panneaux sont autoporteurs et d'autres sont non autoporteurs, i.e. supportés par une structure solide ou semi-solide. Des parois de ces panneaux sont des parois empilées les unes sur les autres. Selon une réalisation, un panneau comporte deux parois entre lesquelles sont disposés des plots d'espacement portés par des barres et dépourvu d'une âme et d'adhésif. Selon une autre réalisation, le panneau comporte des plots tenus par une feuille, munie de trous amortissant visqueux. Selon encore une autre réalisation, le panneau comporte des plots munis d'une collerette, chaque plot étant collé ou faisant partie de la paroi supérieure et/ou inférieure et donc dépourvu d'une âme poreuse.

Le document US2012125710 décrit un assemblage de panneau métallique, comprenant une couche adhésive d'amortissement acoustique, une couche de corps et une couche externe. La couche externe a une pluralité de sections de contact qui font face à la couche de corps à travers la couche adhésive d'amortissement acoustique et une pluralité de sections en relief qui sont espacées de la couche de corps. Les sections de contact aident à amortir les vibrations et / ou le bruit dans le panneau métallique. Les sections en relief rigidifient l'assemblage du panneau métallique.

Le document US6202786 décrit un agencement pour absorber les ondes sonores acoustiques, comprenant une unité de construction de base. Chaque unité de construction de base comprend un corps de support et des entretoises faisant saillie du corps de support. Une unité de couverture qui comprend une couche de couverture reliée aux entretoises ferme des cavités intermédiaires en forme de chambre entre le corps de support et les entretoises. Ces entretoises font corps avec le corps de support. La couche de couverture est déformée, mince et capable de vibrer dans certaines régions au moins. L'unité de construction est en matériau thermoplastique ou thermodurcissable embouti, moulé par transfert ou moulé par injection.

Le document US8657067 décrit un appareil comprenant: une couche de matériau à trous qui s'étendent d'un premier côté de la couche à un second côté de la couche. Ces trous sont configurés pour fournir un niveau souhaité de résistance acoustique à un son traversant la couche. Cette couche de matériau est configurée pour être montée sur une plate-forme, et les trous ont un diamètre qui est sensiblement égal à l'épaisseur de la couche de matériau.

La présente invention a alors pour objet de proposer un panneau autoporteur ayant une masse minimisée qui soit isolant acoustiquement.

Un panneau autoporteur selon l'invention, est défini par les revendications 1-10. Notamment, un panneau autoporteur isolant acoustiquement comporte :
- une paroi visible qui est en regard d'un lieu à isoler acoustiquement, ladite paroi visible étant non autoporteuse,
- une paroi invisible en regard d'une source d'ondes sonores, ladite paroi invisible étant non autoporteuse,
- une âme poreuse agencée entre la paroi visible et la paroi invisible,
- une pluralité d'éléments de liaison s'étendant chacun de la paroi invisible vers la paroi visible, chaque élément de liaison traversant un orifice de ladite âme et étant relié à la paroi visible et à la paroi invisible, chaque élément de liaison ayant pour fonction de séparer la paroi visible de la paroi invisible et de lier mécaniquement la paroi visible et la paroi invisible en découplant acoustiquement la paroi visible et la paroi invisible.

Le panneau en résultant est donc un panneau autoporteur de masse réduite destiné à isoler acoustiquement une source d'ondes sonores.

Un tel panneau ne vise donc pas à posséder des cavités et des logements pour dissiper une onde sonore, mais présente une structure visant à isoler une telle onde sonore.

Le panneau selon l'invention vise à définir un panneau d'habillage par exemple présentant des performances en isolation acoustique acceptables, et compatible avec les exigences de masse et d'épaisseur généralement rencontrées sur les aéronefs.

Le panneau résulte de l'assemblage de deux parois, par exemple parallèles, séparées l'une de l'autre par un espace. Cet espace accueille un matériau poreux, par exemple une mousse à cellules ouvertes et/ou un feutre. Le matériau poreux est choisi pour présenter de bonnes caractéristiques en absorption acoustique (porosité, tortuosité, résistance au passage à l'air) et une faible raideur afin de limiter la transmission des vibrations via son squelette.

Le panneau est plus particulièrement muni d'un assemblage de quatre types d'éléments.

Le premier type d'éléments est visible par un individu. Ce premier type d'éléments est donc la paroi dite « paroi visible » du panneau. La paroi visible peut être formée ou moulée par des techniques non onéreuses en étant obtenue par exemple par thermoformage, par injection, par polymérisation ou pliée dans un moule à la géométrie voulue.

Le second type d'éléments est la paroi dite « paroi invisible » située non pas du côté du panneau en regard d'un individu, mais à l'inverse du côté du panneau en regard d'une source de bruit. La paroi invisible peut être fabriquée avec le même procédé et /ou les mêmes matériaux que la paroi visible, ou bien encore avec un procédé et /ou des matériaux qui diffèrent de ceux de la paroi visible.

La paroi visible et/ ou la paroi invisible peuvent notamment ne pas être autoporteuses à elles seules en étant obtenues par des méthodes non onéreuses.

Le troisième type d'éléments comprend les éléments de liaison qui lient et écartent la paroi visible et la paroi invisible. Par suite, les éléments de liaison permettent d'améliorer la tenue mécanique du panneau et de le rendre autoporteur en éloignant les parois visible et invisible l'une de l'autre.

Dès lors, Il devient possible d'utiliser des parois de faible épaisseur réalisées à l'aide de matériaux éventuellement non composites, contrairement aux parois du type de la deuxième réalisation connue qui implique l'obtention d'une épaisseur élevée engendrant un surcoût massique important.

Chaque paroi peut donc être une paroi « composite » obtenue à l'aide d'une matrice enveloppant des renforts éventuellement peu onéreux, ou mettant en œuvre des procédés de transformation peu onéreux. Toutefois, chaque paroi peut aussi être une paroi « non composite » dépourvue de renfort et susceptible d'avoir un coût de fabrication réduit.

La quantité, la position, l'orientation des éléments de liaison sont définis en fonction de la géométrie du panneau afin d'être optimisés. Ces éléments de liaison sont les moins nombreux possibles afin de limiter les transferts de vibrations entre la paroi visible et la paroi invisible, et espacés autant que possible pour découpler la paroi visible et la paroi invisible.

L'invention propose donc d'obtenir un panneau autoporteur à l'aide de parois liées mécaniquement, mais qui restent découplées acoustiquement ce qui paraît contradictoire.

Cette structure possède alors une masse minimisée. Une telle masse minimisée semble alors aller à l'encontre d'une bonne isolation acoustique selon la loi de masse.

Le quatrième type d'élément est représenté par l'âme du panneau. Cette âme est découpée en fonction de la position des éléments de liaison afin de ne pas être comprimée. Des orifices de l'âme sont ainsi traversés par les éléments de liaison.

L'assemblage final des quatre éléments se fait en reliant les éléments de fixation à la paroi visible et à la paroi invisible.

Lorsque la paroi invisible est excitée par une onde sonore, le panneau fonctionne selon un système masse-ressort-masse, chaque paroi représentant une masse vibrante alors que l'espace inter-paroi accueillant l'âme joue le rôle d'un ressort.

Malgré la présence des éléments de liaison, la paroi visible est découplée de la paroi invisible, pour au moins limiter la transmission des vibrations subies par la paroi invisible à la paroi visible. Le panneau est donc isolant acoustiquement. En effet, le nombre d'éléments de liaison est minimisé pour éviter de coupler la paroi visible et la paroi invisible. De manière surprenante, ce nombre peut être optimisé pour d'une part conférer la tenue mécanique requise au panneau pour le rendre autoporteur, et, d'autre part pour découpler acoustiquement la paroi visible et la paroi invisible, ce qui parait pourtant antinomique.

Le comportement acoustique du panneau ne suit alors plus la loi de masse. L'isolation acoustique apportée est notamment sensible à hautes voire à moyennes fréquences.

Ce panneau tend alors à présenter des performances acoustiques intéressantes, tout en présentant un coût de fabrication pouvant être faible en fonction des techniques choisies pour fabriquer les parois visible et invisible.

De plus, la masse du panneau est réduite en ne nécessitant pas nécessairement des parois épaisses et lourdes.

Ce panneau peut notamment présenter une masse surfacique restreinte comprise entre 2 et 5kg/m² par exemple. Selon la loi de masse décrite précédemment, les performances acoustiques du panneau devraient être modestes. Néanmoins, les éléments de liaison n'empêchent pas l'obtention d'un comportement vibratoire découplé des parois visible et invisible. A hautes fréquences notamment, le panneau ne suit alors plus la loi de masse.

Par ailleurs, un moyen amortissant de liaison fixe au moins une extrémité d'un élément de liaison à une desdites paroi visible et paroi invisible.

Le moyen amortissant est un adhésif. Tout type d'élément collant peut être utilisé, tel que par exemple un adhésif en pate ou liquide, un mastic, un adhésif en rubans...

Ainsi, une extrémité d'un élément de liaison peut adhérer à une paroi par le biais d'un adhésif amortissant, alors que l'autre extrémité de l'élément de liaison est intégrée à l'autre paroi.

Chaque extrémité d'un élément de liaison peut aussi être adhérisé à une paroi.

L'utilisation d'un moyen amortissant de liaison permet de favoriser le découplage des parois du panneau afin de limiter la transmission de vibrations de la paroi invisible vers la paroi visible et par conséquent la génération du bruit rayonné par la paroi visible.

Le panneau peut de plus comporter une ou plusieurs des caractéristiques qui suivent.

Par exemple, l'âme est éventuellement une mousse comprenant une pluralité d'orifices traversant de part en part une épaisseur de ladite mousse, ladite épaisseur de ladite mousse représentant la dimension de la mousse entre la paroi invisible et la paroi visible.

A titre de variante ou de complément, l'âme est un feutre comprenant une pluralité orifices traversant de part en part une épaisseur du feutre, ladite épaisseur du feutre représentant la dimension du feutre entre la paroi invisible et la paroi visible.

Ainsi, l'âme peut être en mousse et / ou en feutre, et peut comporter des orifices traversés par les éléments de liaison.

On entend par feutre tout matériau comportant des fibres relativement souples et beaucoup d'espaces autour de ces fibres. Un feutre peut à titre d'exemple être composé du matériau appelé couramment laine de verre.

Par ailleurs, l'âme est éventuellement désolidarisée de la paroi visible et de la paroi invisible.

De préférence, l'âme n'adhère donc pas à la paroi visible et à la paroi invisible pour limiter le contact « solidien » entre l'âme et les parois visible et invisible afin d'améliorer le comportement global du panneau.

En outre, une desdites des parois visible et invisible dite « première paroi » peut intégrer les éléments de liaison, l'autre paroi non équipée des éléments de liaison étant dite « deuxième paroi ». La première paroi ayant une surface interne en regard d'une autre surface interne de la deuxième paroi, chaque élément de liaison est un élément allongé saillant de la première paroi, en s'étendant à partir de la surface interne de la première paroi vers la surface interne de la deuxième paroi.

La paroi invisible est favorablement fabriquée de manière à intégrer des éléments de liaison, dont la fonction est d'écarter et de lier les parois visible et invisible. Ces éléments de liaison permettent ainsi de garantir la tenue mécanique du panneau.

De préférence, les éléments de liaison sont réalisés lors de la réalisation de la paroi invisible. Selon une technique de moulage, les éléments de liaison sont obtenus à l'aide de pics présents sur le moule servant à fabriquer la paroi invisible.

Ces éléments de liaison sont donc éventuellement solidaires d'une paroi du panneau en représentant des parties constitutives de cette paroi

De façon alternative, ces éléments de liaison sont rapportés sur la paroi invisible, en lui étant solidarisés ou adhérisés.

En outre, deux éléments de liaisons adjacents sont séparés par une distance inter-éléments de liaison prédéterminée supérieure à un seuil minimal.

Le seuil minimal est par exemple égal à 15 centimètres.

Le seuil minimal permet de garantir un découplage suffisant pour obtenir des performances acoustiques sensibles dès les moyennes fréquences. En deçà de ce seuil, le découplage est moins notable.

Le seuil minimal peut dépendre de l'épaisseur de l'espace inter-parois entre la paroi visible et la paroi invisible, ainsi que de la masse des parois visible et invisible.

Par ailleurs, deux éléments de liaisons adjacents peuvent être séparés par une distance inter-éléments de liaison prédéterminée inférieure à un seuil maximal.

Ce seuil maximal peut être égal à 500 mm (50 centimètres).

Le seuil maximal permet de garantir que le panneau possède une tenue mécanique acceptable.

Les valeurs des seuils minimal et maximal sont par exemple déterminées en fonction des matériaux (épaisseur, raideur) constituant la paroi visible et la paroi invisible.

Selon un autre aspect, la paroi visible et la paroi invisible sont des parois usinées ou moulées par une méthode de formage non manuelle.

Le coût de fabrication du panneau est alors très réduit.

Ces méthodes classiques nécessitent de bâtir des parois épaisses pour obtenir un panneau rigide. Toutefois, l'invention permet de lever cet inconvénient en prévoyant des éléments de liaison liant les parois du panneau sans pour autant entraîner le couplage des parois visible et invisible.

Les parois peuvent comprendre des matériaux organiques qui ont pour constituant fondamental des atomes de carbone, comme par exemple des polymères thermodurcissables ou thermoplastiques appartenant à la famille des époxy, des polyesters, des polyuréthanes, des polyéthylène (PE), des polypropylènes (PP), des polyamides (PA), des polycarbonates ( PC), des Polyétherimides (PEI), etc...

Les matériaux organiques employés pourront éventuellement être renforcés, par exemple par des fibres ou des charges, organiques, naturelles ou non naturelles, ou minérales ou métalliques telles que le verre, le carbone, le chanvre, l'aluminium, etc...

Par exemple, la paroi visible comprend un matériau organique renforcé. Par exemple, la paroi visible comprend un matériau composite à renfort carbone et résine thermoplastique ou thermodurcissable. La paroi visible peut alors être mise en forme par estampage ou par formage en étuve ou en autoclave.

La paroi visible peut aussi comprendre un matériau organique non renforcé (par exemple du type thermoplastique PC, PA ou PEI), mais également un matériau thermodurcissable tel que l'époxy. Cette solution généralement plus lourde que la solution composite est néanmoins plus économique.

De plus, le matériau peut être teinté dans la masse, et grainé ou texturé en surface.

Par suite, au moins une desdites paroi visible et paroi invisible est éventuellement une paroi en polymère thermoformé.

Par ailleurs, l'âme peut présenter une épaisseur inférieure à la longueur des éléments de liaison, l'épaisseur représentant la dimension de l'âme entre la paroi visible et la paroi invisible, la longueur représentant la dimension d'un élément de liaison entre la paroi visible et la paroi invisible.

Cette caractéristique vise à ne pas écraser l'âme afin de ne pas nuire au découplage des parois visible et invisible.

Par ailleurs, la paroi visible peut être micro-perforée.

La paroi visible peut encore être gainée et/ou micro-perforée de manière à améliorer l'esthétique et/ou l'absorption acoustique du panneau. De même, des films décoratifs peuvent être appliqués sur la paroi visible.

En outre, l'invention vise aussi un aéronef défini par la revendication 11, qui comporte un panneau du type décrit précédemment.

L'invention et ses avantages apparaîtront avec plus de détails dans le cadre de la description qui suit avec des exemples donnés à titre illustratif en référence aux figures annexées qui représentent :
- la figure 1, une coupe d'un panneau muni d'éléments de fixation fixés à la paroi visible et à la paroi invisible,
- la figure 2, une coupe d'un panneau muni d'éléments de fixation intégrés à la paroi invisible,
- la figure 3, une figure éclatée d'un panneau, et
- la figure 4, un diagramme illustrant l'isolation acoustique produit par un panneau selon l'invention.

Les éléments présents dans plusieurs figures distinctes sont affectés d'une seule et même référence.

On note que trois directions X, Y et Z orthogonales les unes par rapport aux autres sont représentées sur certaines figures.

La direction X est dite longitudinale et une autre direction Y est dite transversale. Enfin, une troisième direction Z est dite d'élévation et correspond aux dimensions en hauteur des structures décrites. Le terme « épaisseur » est alors relatif à une dimension en élévation du dispositif selon cette direction d'élévation.

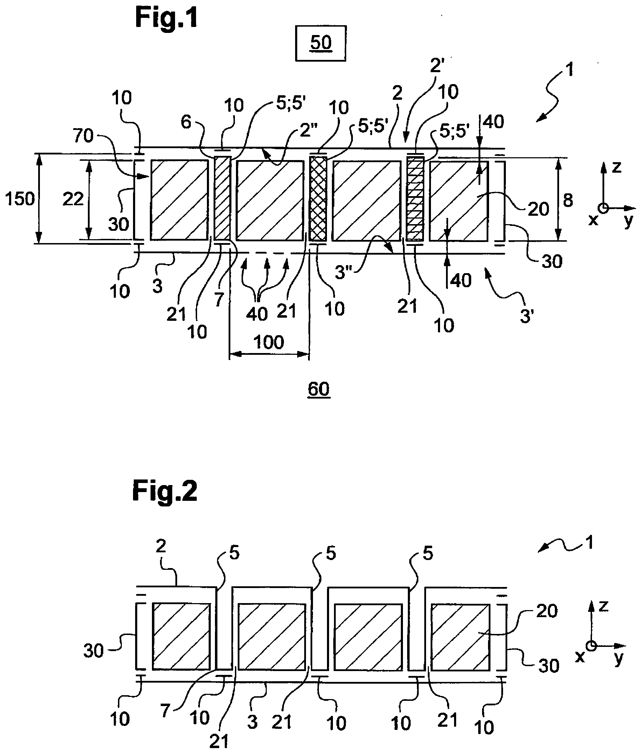

La figure 1 présente un aéronef muni d'un panneau 1. Les autres organes de l'aéronef ne sont pas représentés pour ne pas alourdir inutilement la figure.

Ce panneau 1 est muni d'une paroi dite « paroi invisible 2 » et d'une autre paroi dite « paroi visible 3 ».

Dès lors, la paroi invisible 2 est en regard d'une source 50 de bruit alors qu'à l'inverse la paroi visible 3 est en regard d'un lieu 60 à isoler acoustiquement de la source 50 de bruit. Ce lieu peut être une cabine d'un aéronef notamment.

Par suite, la paroi invisible 2 comprend une première surface externe 2' dirigée vers la source 50 de bruit et une première surface interne 2" dirigée vers un espace inter-paroi du panneau. La paroi visible 3 comprend alors une deuxième surface externe 3' dirigée vers le lieu 60 à isoler et une deuxième surface interne 3" dirigée vers l'espace inter-paroi du panneau.

La paroi invisible 2 et la paroi visible 3 sont parallèles entre elles sur la réalisation de la figure 1. Bien que cette figure 1 illustre un panneau plan, chaque paroi peut présenter une forme non plane.

La paroi invisible 2 et la paroi visible 3 s'étendent chacune longitudinalement et transversalement sur de grandes dimensions, et en élévation selon leur épaisseur.

La paroi invisible 2 et la paroi visible 3 ne sont pas autoporteuses. Par conséquent, la paroi invisible 2 et la paroi visible 3 sont réalisées à l'aide d'un matériau par exemple organique présentant une épaisseur insuffisante pour donner à la paroi une rigidité en flexion la rendant autoporteuse.

Par conséquent, la masse de la paroi invisible 2 et la masse de la paroi visible 3 peuvent être minimisées. Le panneau peut notamment comprendre une paroi visible 3 et /ou une paroi invisible 2 en polymère thermoformé de faible épaisseur.

En effet, la paroi visible 3 et la paroi invisible 2 sont éventuellement des parois usinées ou moulées par une méthode de formage non manuelle, à savoir une méthode ne nécessitant pas un drapage manuel couteux en termes de temps de main d'œuvre. Des techniques usuelles de fabrication peu onéreuses sont alors applicables si le constructeur souhaite optimiser les coûts de fabrication.

En outre, la paroi visible 3 peut comprendre des micro-perforations 40 débouchant sur le lieu 60 à isoler acoustiquement et un espace inter-parois 70 situé entre la paroi invisible 2 et la paroi visible 3.

De plus, le panneau 1 peut comprendre une âme 20 en mousse et/ou en feutre agencée dans l'espace inter-parois 70 du panneau.

Cette âme 20 est favorablement désolidarisée de la paroi visible 3 et/ou de la paroi invisible 2 pour limiter la transmission de vibrations de la paroi invisible 2 vers la paroi visible 3.

Ainsi, l'âme 20 vise à ne pas entraver un mouvement relatif de la paroi invisible et de la paroi visible.

Par suite, l'épaisseur 22 de l'âme 20 peut être inférieure à l'épaisseur 150 de l'espace inter-parois 70 du panneau pour éviter de comprimer l'âme entre la paroi invisible 2 et la paroi visible 3. L'épaisseur 22 de l'âme 20 représente la dimension de l'âme entre la paroi invisible 2 et la paroi visible 3, à savoir selon une direction en élévation orthogonale à la paroi invisible 2 et à la paroi visible 3. De même, l'épaisseur 150 de l'espace inter-parois 70 représente la hauteur séparant la paroi invisible 2 de la paroi visible 3, à savoir selon une direction en élévation orthogonale à la paroi invisible 2 et à la paroi visible 3.

Pour obtenir un panneau rigide en flexion à l'aide de parois potentiellement souples, le panneau présente une pluralité d'éléments de liaison 5 s'étendant chacun de la paroi invisible 2 vers la paroi visible 3.

Dès lors, l'âme 20 est munie d'un orifice 21 par élément de liaison 5. Chaque orifice 21 traverse de part en part l'épaisseur 22 de l'âme selon la direction en élévation de manière à déboucher vers la première surface interne 2" de la paroi invisible 2 et vers la deuxième surface interne 3" de la paroi visible 3.

Ainsi, chaque élément de liaison 5 comprend un élément allongé 5' qui traverse un orifice 21 de l'âme pour relier la paroi invisible 2 et la paroi visible 3.

Chaque orifice 21 présente des dimensions supérieures aux dimensions d'un élément de liaison dans un plan parallèle à la paroi visible et à la paroi invisible. Dès lors, un élément de liaison n'exerce pas d'effort longitudinal et transversal sur l'âme, voire peut ne pas toucher l'âme.

Pour éviter un écrasement de l'âme, cette âme 20 possède par exemple une épaisseur 22 qui est inférieure à la longueur 8 des éléments de liaison 5. Cette longueur 8 représente la dimension d'un élément de liaison 5 entre la paroi visible 3 et la paroi invisible 2. Par exemple, cette longueur 8 est comprise entre 10 et 20 millimètres.

Chaque élément de liaison peut être orthogonal à la paroi invisible 2 et à la paroi visible 3, ou encore être oblique et présenter une angulation aigüe avec la paroi invisible 2 et/ou la paroi visible 3.

Chaque élément de liaison 5 permet de lier selon une direction en élévation la paroi visible 3 et la paroi invisible 2, en écartant cette paroi visible 3 et de la paroi invisible 2 en élévation.

Toutefois, ces éléments de liaison ne sont pas une entrave au fonctionnement découplé de la paroi invisible 2 et de la paroi visible 3.

En effet, le nombre d'éléments de liaison peut être optimisé pour raidir de manière adéquate le panneau, en laissant une liberté de mouvement à la paroi visible 3 par rapport à la paroi invisible 2 lorsque la paroi invisible 2 est excitée par la source 50 de bruit à moyennes ou à hautes fréquences.

Notamment, deux éléments de liaison 5 adjacents sont séparés par une distance inter-éléments de liaison 100 prédéterminée pour tenir cet objectif.

Cette distance inter-éléments de liaison 100 est favorablement supérieure à un seuil minimal, par exemple un seuil minimal de l'ordre de 150 mm (15 centimètres).

En complément ou de manière alternative, cette distance inter-éléments de liaison 100 est favorablement inférieure à un seuil maximal, par exemple un seuil maximal de l'ordre de 50 centimètres.

Par ailleurs, le panneau peut comprendre des bords périphériques 30.

Selon la réalisation de la figure 1, chaque élément de fixation est relié à la paroi visible 3 et à la paroi invisible 2.

Par exemple, les deux extrémités de chaque élément de fixation sont respectivement reliées à la paroi visible 3 et à la paroi invisible 2 par des moyens amortissants 10.

Chaque moyen amortissant peut comprendre un adhésif, tel que de la colle par exemple.

Selon la réalisation de la figure 2, chaque élément de liaison est une partie intégrante d'une desdites parois invisible 2 et visible 3.

Les éléments de liaison peuvent être des parties constitutives d'une même paroi, et notamment de la paroi invisible 2.

Dès lors, une desdites des parois invisible 2 et visible 3 dite «première paroi » intègre les éléments de liaison 5, l'autre paroi non équipée des éléments de liaison étant dite « deuxième paroi ».

Chaque élément de liaison comprend donc un élément allongé saillant de la première paroi en s'étendant à partir de sa surface interne vers la surface interne de la deuxième paroi.

Dès lors, l'extrémité libre de chaque élément de liaison est reliée à la paroi dépourvue d'élément de liaison par un moyen amortissant, tel qu'un moyen amortissant comprenant un adhésif.

Selon l'exemple de la figure 2, la paroi invisible 2 représente la première paroi équipée des éléments de liaison, et la paroi visible 3 représente la deuxième paroi dépourvue d'éléments de liaison. Chaque élément de liaison comprend donc un élément allongé saillant de la paroi invisible 2 en s'étendant à partir de sa première surface interne vers la deuxième surface interne de la paroi visible. Chaque élément de liaison est alors relié à la paroi visible 3 par un adhésif.

Indépendamment de la réalisation, au moins une extrémité d'un élément de liaison est alors reliée à la paroi invisible 2 ou à la paroi visible 3.

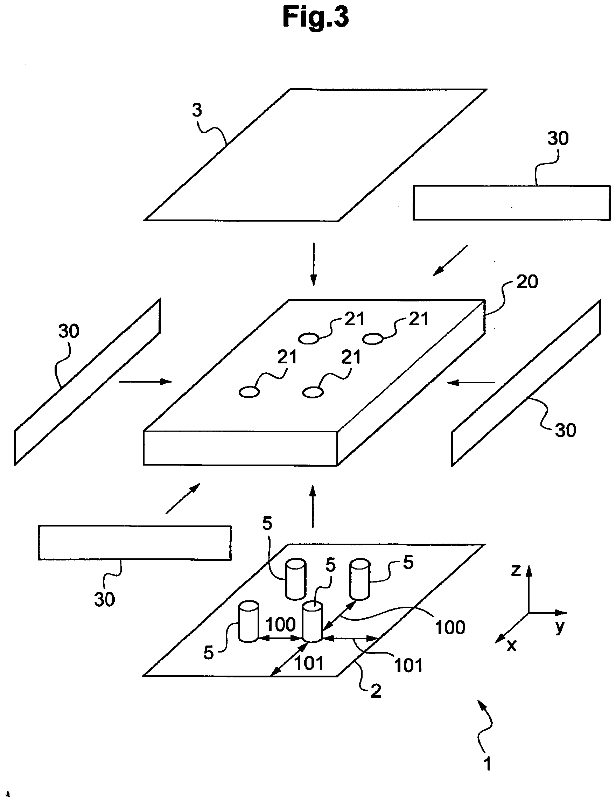

La figure 3 présente une vue éclatée d'un panneau selon la figure 2 pour illustrer sa composition. On note que les éléments de liaison périphérique du panneau sont disposés à une distance périphérique 101 de la périphérie du panneau, cette distance périphérique pouvant être inférieure à la distance inter-éléments de liaison.

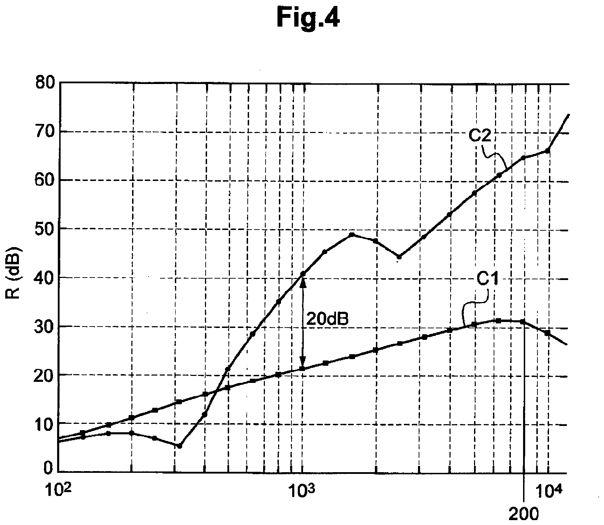

La figure 4 illustre l'atténuation acoustique pouvant résulter de l'implémentation d'un revêtement selon l'invention.

Cette figure 4 présente alors un diagramme comportant en abscisse une fréquence de vibration, et en ordonnée l'atténuation acoustique apportée par le panneau étudié.

La première courbe C1 présente ainsi l'atténuation acoustique apportée par un panneau ayant une structure sandwich en matériaux composites, alors que la deuxième courbe C2 présente l'atténuation acoustique apportée par un panneau selon l'invention pour une masse équivalente.

L'atténuation d'un panneau en matériaux composites simple suit une droite selon la loi de masse jusqu'à la fréquence critique 200 de ce panneau.

A l'inverse, l'atténuation acoustique d'un panneau selon l'invention est relativement modéré à basses fréquences, pour devenir au contraire sensible pour les moyennes et hautes fréquences.

A iso-masse, l'invention représente donc un réel progrès par rapport à une structure sandwich en matériaux composites.

On constate que le revêtement peut tendre à améliorer l'atténuation acoustique d'un panneau dans la gamme des moyennes fréquences.

Naturellement, la présente invention est sujette à de nombreuses variations quant à sa mise en œuvre. Bien que plusieurs modes de réalisation aient été décrits, on comprend bien qu'il n'est pas concevable d'identifier de manière exhaustive tous les modes possibles.

## Revendications

1. Panneau (1) autoporteur isolant acoustiquement,
ledit panneau (1) comportant :
- une paroi visible (3) qui est en regard d'un lieu (60) à isoler acoustiquement, ladite paroi visible (3) étant non autoporteuse et visible pour un individu,
- une paroi invisible (2) en regard d'une source (50) d'ondes sonores, ladite paroi invisible (2) étant non autoporteuse et invisible pour ledit individu,
- une âme (20) poreuse agencée entre la paroi visible (3) et la paroi invisible (2),
- une pluralité d'éléments de liaison (5) s'étendant chacun de la paroi invisible (2) vers la paroi visible (3), chaque élément de liaison (5) traversant un orifice (21) de ladite âme (20) et étant relié à la paroi visible (3) et à la paroi invisible (2), chaque élément de liaison (5) ayant pour fonction de séparer la paroi visible (3) de la paroi invisible (2) et de lier mécaniquement la paroi visible (3) et la paroi invisible (2) en découplant acoustiquement la paroi visible (3) et la paroi invisible (2), deux éléments de liaison (5) adjacents étant séparés par une distance inter-éléments de liaison (100),
- un moyen amortissant (10) de liaison fixant au moins une extrémité (6, 7) d'un élément de liaison (5) à une desdites paroi visible (3) et paroi invisible (2), ledit moyen amortissant étant un adhésif ;
**caractérisé en ce que** la distance inter-éléments de liaison (100) prédéterminée est supérieure à un seuil minimal égal à 150 millimètres, ladite distance inter-éléments de liaison (100) prédéterminée étant inférieure à un seuil maximal égal à 500 millimètres ; et ladite âme (20) présente une épaisseur (22) inférieure à la longueur (8) des éléments de liaison, ladite épaisseur (22) représentant la dimension de l'âme entre la paroi visible (3) et la paroi invisible (2), ladite longueur (8) représentant la dimension d'un élément de liaison (5) entre la paroi visible (3) et la paroi invisible (2).

2. Panneau selon la revendication 1,
**caractérisé en ce que** ladite âme (20) est une mousse comprenant une pluralité d'orifices (21) traversant de part en part une épaisseur (22) de ladite mousse, ladite épaisseur (22) de ladite mousse représentant la dimension de la mousse entre la paroi invisible (2) et la paroi visible (3).

3. Panneau selon la revendication 1,
**caractérisé en ce que** ladite âme (20) est un feutre comprenant une pluralité orifices (21) traversant de part en part une épaisseur (22) du feutre, ladite épaisseur (22) du feutre représentant la dimension du feutre entre la paroi invisible (2) et la paroi visible (3).

4. Panneau selon l'une quelconque des revendications 1 à 3,
**caractérisé en ce que** ladite âme est désolidarisée de la paroi visible et de la paroi invisible.

5. Panneau selon l'une quelconque des revendications 1 à 4,
**caractérisé en ce qu'**une desdites des parois dite « première paroi » intègre les éléments de liaison (5), l'autre paroi non équipée des éléments de liaison étant dite « deuxième paroi », la première paroi ayant une surface interne (2") en regard d'une autre surface interne (3") de la deuxième paroi, chaque élément de liaison (5) étant un élément allongé saillant de la première paroi en s'étendant à partir de la surface interne (2") de la première paroi vers la surface interne (3") de la deuxième paroi.

6. Panneau selon l'une quelconque des revendications 1 à 5,
**caractérisé en ce que** ladite paroi visible (3) et ladite paroi invisible (2) sont des parois usinées ou moulées par une méthode de formage non manuelle.

7. Panneau selon l'une quelconque des revendications 1 à 5,
**caractérisé en ce qu'**au moins une desdites paroi visible (3) et paroi invisible (2) sont des parois en polymère thermoformé.

8. Panneau selon l'une quelconque des revendications 1 à 7, **caractérisé en ce que** ladite paroi visible (3) est micro-perforée.

9. Panneau selon l'une quelconque des revendications 1 à 8,
**caractérisé en ce que** ladite paroi visible (3) est parallèle à ladite paroi invisible (2).

10. Panneau selon l'une quelconque des revendications 1 à 9,
**caractérisé en ce que** chaque élément de liaison (5) est une partie intégrante de la paroi invisible (2).

11. Aéronef,
**caractérisé en ce que** cet aéronef comporte un panneau (1) selon l'une quelconque des revendications 1 à 10.

## Patentansprüche

1. Selbsttragende akustisch isolierende Platte (1), wobei die Platte (1) umfasst:
- eine sichtbare Wand (3), die einer schalltechnisch zu isolierenden Stelle (60) zugewandt ist, wobei die sichtbare Wand (3) nicht selbsttragend und für eine Person sichtbar ist,
- eine unsichtbare Wand (2), die einer Quelle von Schallwellen (50) zugewandt ist, wobei die unsichtbare Wand (2) nicht selbsttragend und für die Person unsichtbar ist,
- einen porösen Kern (20), der zwischen der sichtbaren Wand (3) und der unsichtbaren Wand (2) angeordnet ist,
- eine Mehrzahl von Verbindungselementen (5), die sich jeweils von der unsichtbaren Wand (2) zur sichtbaren Wand (3) erstrecken, wobei jedes Verbindungselement (5) durch eine Öffnung (21) des Kerns (20) verläuft und mit der sichtbaren Wand (3) und der unsichtbaren Wand (2) verbunden ist, wobei jedes Verbindungselement (5) die Funktion hat, die sichtbare Wand (3) von der unsichtbaren Wand (2) zu trennen und die sichtbare Wand (3) und die unsichtbare Wand (2) mechanisch zu verbinden und dabei die sichtbare Wand (3) und die unsichtbare Wand (2) akustisch zu entkoppeln, wobei zwei benachbarte Verbindungselemente (5) durch einen Verbindungselementabstand (100) getrennt sind,
- ein verbindendes Dämpfungsmittel (10), das mindestens ein Ende (6, 7) eines Verbindungselements (5) an entweder der sichtbaren Wand (3) oder der unsichtbaren Wand (2) befestigt, wobei das Dämpfungsmittel ein Klebstoff ist;
**dadurch gekennzeichnet, dass** der vorgegebene Verbindungselementabstand (100) größer als ein minimaler Schwellenwert von 150 Millimetern ist, der vorgegebene Verbindungselementabstand (100) kleiner als ein maximaler Schwellenwert von 500 Millimetern ist, und der Kern (20) eine Dicke (22) aufweist, die kleiner ist als die Länge (8) der Verbindungselemente, wobei die Dicke (22) die Abmessung des Kerns zwischen der sichtbaren Wand (3) und der unsichtbaren Wand (2) darstellt, wobei die Länge (8) die Abmessung eines Verbindungselements (5) zwischen der sichtbaren Wand (3) und der unsichtbaren Wand (2) darstellt.

2. Platte nach Anspruch 1,
**dadurch gekennzeichnet, dass** der Kern (20) ein Schaumstoff ist, der eine Mehrzahl von Öffnungen (21) aufweist, die eine Dicke (22) des Schaumstoffs von einer Seite zur anderen durchlaufen, wobei die Dicke (22) des Schaumstoffs die Abmessung des Schaumstoffs zwischen der unsichtbaren Wand (2) und der sichtbaren Wand (3) darstellt.

3. Platte nach Anspruch 1,
**dadurch gekennzeichnet, dass** der Kern (20) ein Filz ist, der eine Mehrzahl von Öffnungen (21) umfasst, die eine Dicke (22) des Filzes von einer Seite zur anderen durchlaufen, wobei die Dicke (22) des Filzes die Abmessung des Filzes zwischen der unsichtbaren Wand (2) und der sichtbaren Wand (3) darstellt.

4. Platte nach einem der Ansprüche 1 bis 3,
**dadurch gekennzeichnet, dass** der Kern mit der sichtbaren Wand und der unsichtbaren Wand unverbunden ist.

5. Platte nach einem der Ansprüche 1 bis 4,
**dadurch gekennzeichnet, dass** eine der Wände, als "erste Wand" bezeichnet, die Verbindungselemente (5) integriert, und die andere Wand, die nicht mit den Verbindungselementen ausgestattet ist, als "zweite Wand " bezeichnet wird, dass die erste Wand eine Innenfläche (2") aufweist, die einer anderen Innenfläche (3") der zweiten Wand zugewandt ist, und dass jedes Verbindungselement (5) ein längliches Element ist, das von der ersten Wand absteht, indem es sich von der Innenfläche (2") der ersten Wand zur Innenfläche (3") der zweiten Wand erstreckt.

6. Platte nach einem der Ansprüche 1 bis 5,
**dadurch gekennzeichnet, dass** die sichtbare Wand (3) und die unsichtbare Wand (2) Wände sind, die durch ein nichtmanuelles Formverfahren abtragend bearbeitet oder abgeformt sind.

7. Platte nach einem der Ansprüche 1 bis 5, **dadurch gekennzeichnet, dass** von der sichtbaren Wand (3) und der unsichtbaren Wand (2) mindestens eine Wand aus einem thermogeformten Polymer besteht.

8. Platte nach einem der Ansprüche 1 bis 7, **dadurch gekennzeichnet, dass** die sichtbare Wand (3) mikroperforiert ist.

9. Platte nach einem der Ansprüche 1 bis 8,
**dadurch gekennzeichnet, dass** die sichtbare Wand (3) parallel zu der unsichtbaren Wand (2) ist.

10. Platte nach einem der Ansprüche 1 bis 9,
**dadurch gekennzeichnet, dass** jedes Verbindungselement (5) ein integraler Bestandteil der unsichtbaren Wand (2) ist.

11. Luftfahrzeug,
**dadurch gekennzeichnet, dass** das Luftfahrzeug eine Platte (1) nach einem der Ansprüche 1 bis 10 aufweist.

## Claims

1. Self-supporting acoustic insulation panel (1), the panel (1) comprising:
- a visible wall (3) which is opposite a location (60) which is intended to be acoustically insulated, the visible wall (3) not being self-supporting and being visible to an individual,
- an invisible wall (2) opposite a source (50) of sound waves, the invisible wall (2) not being self-supporting and being invisible to the individual,
- a porous core (20) which is arranged between the visible wall (3) and the invisible wall (2),
- a plurality of connection elements (5) which each extend from the invisible wall (2) to the visible wall (3), each connection element (5) extending through a hole (21) of the core (20) and being connected to the visible wall (3) and the invisible wall (2), each connection element (5) being intended to separate the visible wall (3) from the invisible wall (2) and to mechanically connect the visible wall (3) and the invisible wall (2) by acoustically decoupling the visible wall (3) and the invisible wall (2), two adjacent connection elements (5) being separated by an inter-element connection distance (100),
- a damping connection means (10) which fixes at least one end (6, 7) of a connection element (5) to one of the visible wall (3) and invisible wall (2), the damping means being an adhesive;
**characterised in that** the predetermined inter-element connection distance (100) is greater than a minimum threshold equal to 150 millimetres, the predetermined inter-element connection distance (100) being less than a maximum threshold equal to 500 millimetres; and the core (20) has a thickness (22) less than the length (8) of the connection elements, the thickness (22) representing the dimension of the core between the visible wall (3) and the invisible wall (2), the length (8) representing the dimension of a connection element (5) between the visible wall (3) and the invisible wall (2).

2. Panel according to claim 1,
**characterised in that** the core (20) is a foam which comprises a plurality of holes (21) which extend from one side to the other through a thickness (22) of the foam, the thickness (22) of the foam representing the dimension of the foam between the invisible wall (2) and the visible wall (3).

3. Panel according to claim 1,
**characterised in that** the core (20) is a felt which comprises a plurality of holes (21) which extend from one side to the other through a thickness (22) of the felt, the thickness (22) of the felt representing the dimension of the felt between the invisible wall (2) and the visible wall (3).

4. Panel according to any one of claims 1 to 3,
**characterised in that** the core is disconnected from the visible wall and the invisible wall.

5. Panel according to any one of claims 1 to 4,
**characterised in that** one of the walls referred to as the "first wall" includes the connection elements (5), the other wall which is not provided with the connection elements being referred to as the "second wall", the first wall having an internal surface (2") opposite another internal surface (3'') of the second wall, each connection element (5) being an elongate element which protrudes from the first wall and extends from the internal surface (2") of the first wall towards the internal surface (3'') of the second wall.

6. Panel according to any one of claims 1 to 5, **characterised in that** the visible wall (3) and the invisible wall (2) are walls which are machined or moulded by a non-manual forming method.

7. Panel according to any one of claims 1 to 5, **characterised in that** at least one of the visible wall (3) and invisible wall (2) are walls of thermoformed polymer material.

8. Panel according to any one of claims 1 to 7, **characterised in that** the visible wall (3) is microperforated.

9. Panel according to any one of claims 1 to 8, **characterised in that** the visible wall (3) is parallel with the invisible wall (2).

10. Panel according to any one of claims 1 to 9, **characterised in that** each connection element (5) is an integral part of the invisible wall (2).

11. Aircraft,
**characterised in that** this aircraft comprises a panel (1) according to any one of claims 1 to 10.
